# EUROPEAN PATENT SPECIFICATION

(11) **EP 1 888 954 B1**
(45) Date of publication and mention of the grant of the patent: **01.04.2009**
(21) Application number: 06755253.9
(22) Date of filing: 18.05.2006
(51) Int. Cl.: F16K 24/04, B60K 15/035, F16K 17/36

(54) **LIQUID TANK VENTING SYSTEM**
FLÜSSIGKEITSTANKLÜFTUNGSSYSTEM
SYSTEME D'EVENT POUR RESERVOIR A LIQUIDES

(30) Priority: 24.05.2005 FR 0505194
(43) Date of publication of application: 20.02.2008
(73) Proprietor: Inergy Automotive Systems Research (Société A.), 1120 Brussels (BE)
(72) Inventor: GANACHAUD, Patrick, F-53000 Laval (FR); ROUXEL, Thierry, F-53210 Argentre (FR); IRIBARNE, Alain, F-53000 Laval (FR)
(74) Representative: Jacques, Philippe
(86) International application number: PCT/EP2006/062422
(87) International publication number: WO 2006/125751

(56) References cited:
- EP-A- 1 020 670
- EP-A- 1 145 820
- WO-A-00/73644
- US-A1- 2002 011 265
- US-B1- 6 213 100

## Description

The present invention relates to a liquid tank venting system.

Prior art venting systems according to the preamble of claim 1 are known for instance from US-A-2002/0011265.

Liquid tanks, when they can be moved with the liquid that they contain, are generally equipped with a venting system that guarantees environmental safety although the tank is subjected to various stresses: movements in any direction and of any amplitude, thermal stresses, underpressure and overpressure.

This requirement is encountered in the case of fuel tanks, in particular when they are mounted on motor vehicles, and it is essential to prevent liquid fuel from getting out and to manage large gas pressure and volume changes when filling the tank and throughout the time that the liquid is stored in said tank.

Solutions have been developed for solving these problems that use safety valves immersed in the tank, the upper portion of the valves passing through a wall of the tank. These valves generally open into a duct that leads to a module or canister containing material (generally carbon black) capable of trapping the liquid vapours present in the gases coming from the tank. However, it is not unusual for systems of this type to still have difficulties owing to the fact that, because of the particular operating circumstances, such as sudden movements or excessively high angle of tilt of the vehicle, liquid coming from the tank can nevertheless pass through the barrier of the safety valve and get into the duct leading to the canister, or even reaching the latter and disturbing the free flow of the vapours.

As a remedy for this accidental entrainment of liquid out of the tank, it has been sought to retain the liquid escaping via the duct leading to the canister by interposing, in this duct, a dead volume intended to act as a container for collecting the liquid and for letting the vapours pass through freely.

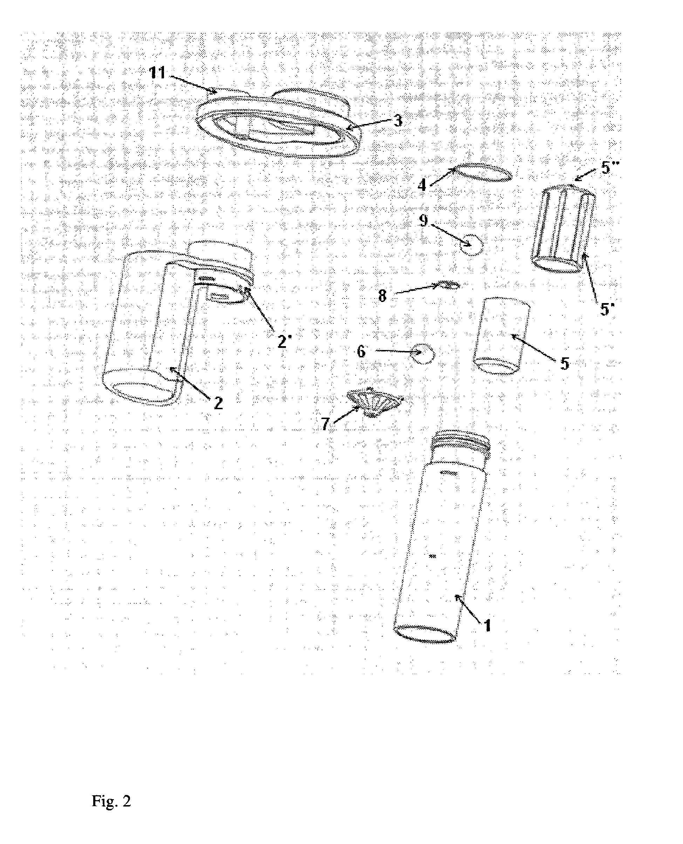

It is known, from British Patent Application GB-A-2 269 375, to use a container having walls that are impermeable to the liquid, which container is integrated into a fuel tank and in which a safety valve (see Figure 2) is housed. A calibrated opening 14 made at the top of the container allows ingress of liquid when the tank is at an excessively high tilt angle or subjected to excessively violent movements. A duckbill-shaped non-return valve 12 allows the container 11 to be drained when the level of the liquid has fallen.

However, in this system there remain problems associated with the fact that, when small liquid droplets are entrained via the aperture 14, because of their small weight they may be entrained directly by the gas stream into the venting duct 7 without dropping into the container 11.

Consequently, the Applicant has developed an improved system, forming the subject matter of Patent EP 1020670, which system remedies this problem because the float valve is located outside the volume of the container. However, such a system is bulky and requires the use of several separate parts connected by a duct. This increases the cost of the system, the difficulty of fitting it and the risks of a leak (each separate part passing through the wall of the tank). Furthermore, because the flow area between the valve and the container is small, the gas flow rate therein is high. This affects the quality of the settling operation.

The object of the present invention is to solve these problems by providing a compact system of particular geometry, having a limited risk of leakage and in particular being able to be adapted to a modular arrangement with a small number of parts, hence great ease of assembly. This system also has the advantage of being able to have a lower flow rate (owing to the fact that the flow area between the container and the valve can be easily increased), and therefore more effective settling.

For this purpose, the present invention relates to a venting system for a liquid tank as defined in claim 1.

The liquid tank is a closed vessel, bounded by a wall of various shapes, generally sealed from the outside, which may be equipped with various internal accessories or accessories that pass through the wall of the vessel. The tank may contain any type of organic or inorganic liquid, or a mixture of such liquids. In particular, it is a fuel tank for motor vehicles. All types of fuel used by motor vehicles may be stored in the liquid tank, in particular petrol and diesel.

The liquid tank venting system forming the subject of the invention is a device comprising several elements, the overall function of which is to allow a tank to be vented when it is being filled and/or when the liquid that it contains is being used and consumed, while protecting the external environment from any leak or emanation of undesirable gases.

The venting system according to the invention comprises a float valve, that is to say a device for closing off or exposing an opening that brings the interior of the tank into communication with a venting duct, and to do so by means of a valve controlled by the displacement of a float entrained by the level of liquid present in the tank.

The float of the valve is preferably a leaktight float, that is to say one having no apertures liable to trap liquid. Thus, after a roll-over and return to the normal configuration, the float is prevented from sinking under the effect of the weight of the trapped liquid. Such a leaktight float may be made as one part or at least two parts preferably defining a hollow volume. The latter embodiment is preferred because of its ease of implementation.

According to the invention, the float valve has a chamber placed at least partly inside the tank and in which the float slides. This chamber may be placed entirely inside the tank. Alternatively, it may pass through an opening in the wall of the tank.

The chamber of the float preferably has a support on which the float rests when the level of liquid in the tank has not reached the level of the support. This support is generally pierced by at least one aperture allowing the liquid to penetrate into the chamber when the level of fuel exceeds the level of this support.

Preferably, the float valve also includes a cover integral with this chamber and sealingly fastened to the wall of the tank. As non-limiting examples of sealing techniques that can be used, mention may be made of welding the cover of the valve to the wall of the tank, field clamping or the use of a seal tailored to the nature of the liquid contained.

The cover may be fastened to the wall of the tank internally (that is to say on the surface of this wall on the inside of the tank), or externally. In the first case, the chamber will generally be entirely inside the tank, whereas in the second case the chamber will in general be only partly within the internal volume of the tank. The first case lends itself well to connection to a venting duct also internal to the tank, whereas the second case lends itself well to connecting a venting duct external to the tank.

If the cover is fastened internally to the wall of the tank and the venting duct is internal to the tank, the wall of the tank is advantageously not pierced or impaired at the point where said cover is fastened. One suitable method therefore consists in moulding a relief portion in the wall of the tank at this point that allows (either directly or via the use of an intermediate part, preferably an elastic part) the cover to be fastened to the tank. This method is explained in detail in Applications EP 1 145 820 and EP 1 147 934 in the name of the Applicant, the content of which is for this purpose incorporated into the present application by reference.

The abovementioned venting duct is a duct constituting one end of a venting circuit. In other words, the gases leaving or entering the tank flow in this duct, which is sealingly connected on one side to the flow valve/closed volume assembly of the system according to the invention and communicates on the other side with a circuit terminating in the external atmosphere, generally via a canister.

According to the invention, the venting system also includes a closed volume internal to the tank. The term "closed volume" is understood to mean a volume of any shape bounded by walls impermeable to the liquids and gases. These walls generally consist of a lateral wall, which may be made as one part with a bottom, and a cover.

This closed volume is placed inside the tank and communicates with the valve by means of an aperture, a volume or an appropriate duct. Preferably, this communication offers a sufficiently large flow area to be able to facilitate the settling. For this purpose, it is preferably an aperture or volume of appropriate dimensions, and not a duct.

The closed volume also communicates with the venting circuit via an appropriate opening or nozzle, generally in the extension of the abovementioned venting duct. Its function is to constitute a container capable of collecting and retaining any entrainment of liquid coming from the tank that could have got past the barrier of the float valve. According to the invention, it includes a draining device. The term "draining device" is understood to mean a draining valve located at a low point in the tank, which can open when a sufficient weight of liquid has been collected in this tank and which communicates directly with the internal volume of the tank. The function of this draining device is to recycle the liquid that has been entrained with the gases leaving the tank and to prevent the tank from being filled beyond a predetermined maximum level that depends on the shape of this container and on the characteristics of the draining valve.

According to one advantageous embodiment of the venting system, the draining device of the container consists of a diaphragm valve which closes off an aperture located at a low point in the container. A diaphragm made of elastomer material in the form of an inverted umbrella has given excellent results.

The closed volume is preferably chosen to have a size sufficient to collect all entrainment of liquid liable to get past the barrier of the float valve having particular circumstances, especially when the tank is full or close to its maximum fill level.

According to the invention, the closed volume (or container) at least partly surrounds the float valve or, in other words, the volume "embraces" the chamber of the float valve. Preferably, the volume matches at least one portion of the external surface of the chamber. The chamber has a substantially cylindrical shape and a circular cross section and the closed volume has an elongate shape and a cross section substantially of U or moon-crescent shape which at least partly surrounds the substantially circular cross section of the chamber, and does so preferably over a substantial portion of its length.

The chamber and the closed volume may or may not be of the same length. In general, these lengths are not equal, each element having an ideal shape and an ideal size that are tailored to its function (separate designs). One embodiment giving good results (especially in terms of resistance to waves liable to inopportunely close off the float valve) is that in which said valve is longer (that is to say it descends lower into the tank) than the closed volume, and does so by the fact that its chamber is extended by a skirt short of the portion where the float slides, that is to say the abovementioned support. Such a chamber shape is described in EP 0 803 671 in the name of the Applicant, the content of which is incorporated in the present application by reference.

In the system according to the invention, the closed volume preferably has a lateral wall provided with a bottom and a cover preferably made as one part with the cover of the float valve. In this way, the communication between said valve and the closed volume may be easily achieved, and in particular it is easy to provide therein a flow area of large size (in order to limit the flow rate and facilitate settling, as explained above).

Particularly advantageously, the lateral wall of the volume and the chamber of the float valve are fastened to this cover by a clip-fastening mechanism, and the cover itself is fastened to the tank by welding. This cover therefore has a geometry appropriate for accommodating the abovementioned elements by clip-fastening and all of the three parts have a geometry such that, once they are assembled, suitable communication (opening, volume or duct) exists between the float valve and the volume in order to allow the gases to flow from said valve to the volume and then to the venting duct. It is therefore advantageous for the latter also to be moulded as one part with the other common cover to the valve and to the volume.

One easy way of carrying out in practice the abovementioned clip-fastening assembly operation consists in moulding an appendage on the closed volume, having a substantially annular shape, onto which the chamber of the float valve is clipped before the whole assembly is clipped into the cover.

One embodiment giving good results in terms of removing the entrained liquids is that in which the communication between the float valve and the closed volume has itself a geometry suitable for trapping the liquids. It may for example comprise a passage provided with baffles. The float valve and/or the closed volume may also be provided with such baffles coming before and after said communication respectively.

As described in the abovementioned Application EP 1 020 670, the venting system according to the invention preferably also includes an overfill protection (OFP) device. The OFP device according to this embodiment may be chosen from among all the devices known for fulfilling this function. OFP devices having a heavy ball that closes off, by gravity, an aperture for gases to flow into the venting duct give good results.

According to a first embodiment, the OFP device is housed in the upper portion of the float valve, inside the chamber, above the float. It then rests on a wall that separates the float valve into an upper portion, fulfilling the OFP function, and a lower portion, fulfilling the venting function. This wall is pierced by an aperture which is closed off by the ball below a certain pressure level in the tank. This wall is advantageously moulded as a single part with the chamber of the float valve. The advantage of this embodiment is that it generates no pressure drops.

According to a second embodiment, the OFP device (or ball) is housed in the upper portion of the closed volume, where it also rests on a wall pierced by an aperture which is located opposite the aperture or nozzle for connection to the venting circuit. This embodiment has the advantage of being less bulky and of allowing a vacuum path to be easily formed (it does not have to be sealing at this point level with the ball, whereas there must be sealing when said ball is located in the float valve). It also has the advantage that, in the case of a device operating with several float valves and a single drainable container, only the latter has to be provided with an OFP device. However, it does have the drawback of increasing (sometimes excessively) the pressure drops.

Again as described in the abovementioned application EP 1 020 670, in the venting system according to the invention the float valve preferably sits above a heavy-ball device resting in an apertured well and having the function of causing said valve to close should the tank roll over. This device must fulfil an ROV (roll-over valve) function in which the tank is automatically closed off as soon as tank starts to roll over.

Advantageously, this embodiment is combined with the particular venting system comprising an OFP device housed in the upper portion of the float valve as described above.

In particular in the case in which the liquid tank is a fuel tank made of synthetic material, whether thermoplastic or thermosetting, which is in the solid state under ambient conditions, as well as blends of at least two of these materials. The intended polymers comprise both homopolymers and copolymers (especial binary or ternary copolymers). Examples of such copolymers are, non-limitingly: random copolymers, linear block copolymers, non-linear block copolymers, and graft copolymers. Thermoplastic polymers, including thermoplastic elastomers, and blends thereof are preferred.

Any type of thermoplastic polymer or copolymer, the melting point of which is below the decomposition temperature, is suitable. Thermoplastics having a melting range spread over at least 10 degrees Celsius are particularly suitable. Examples of such materials include those that exhibit polydispersion in their molecular weight.

In particular, the components according to the invention may be made of polyolefins, grafted polyolefins, thermoplastic polyesters, polyketones, polyamides and copolymers thereof.

One polymer often used in plastic fuel tanks is polyethylene, in particular high-density polyethylene (HDPE) possibly in a multilayer structure including a barrier layer (for example based on EVOH, or hydrolysed ethylene/vinyl acetate copolymer) or one with a surface treatment (fluorination or sulphonation for example) for the purpose of making it impermeable to the fuels for which it is intended. Consequently, when the system according to the invention includes a cover, this is preferably based on HDPE, so as also to be welded to the tank. As for the other parts, these are preferably based on at least one hydrocarbon-impermeable plastic. Examples of such hydrocarbon-impermeable plastics are, non-limitingly: polyethylene terephthalate or polybutylene terephthalate, polyamides, polyketones and polyacetals. It should be noted that all these parts, the cover included, may be multilayer structures, comprising, for example, at least one high-density polyethylene layer and optionally a hydrocarbon barrier layer (on the surface or within said structures).

In the case of a plastic fuel tank, and in particular one based on HDPE, good results have been obtained with systems, including a cover, based on HDPE, and a chamber, a float and a closed volume based on POM (polyoxymethylene) or PBT (polybutylene terephthalate).

Figures 1 to 4 appended herewith illustrate non-limitingly and schematically the principle of certain embodiments of the invention, given by way of example.

Figures 1 to 3 relate to the same system and constitute, respectively: an overall view of the assembled system (Figure 1); an exploded view of all its elements before they are fitted together (Figure 2); and a cross section through the system (Figure 3).

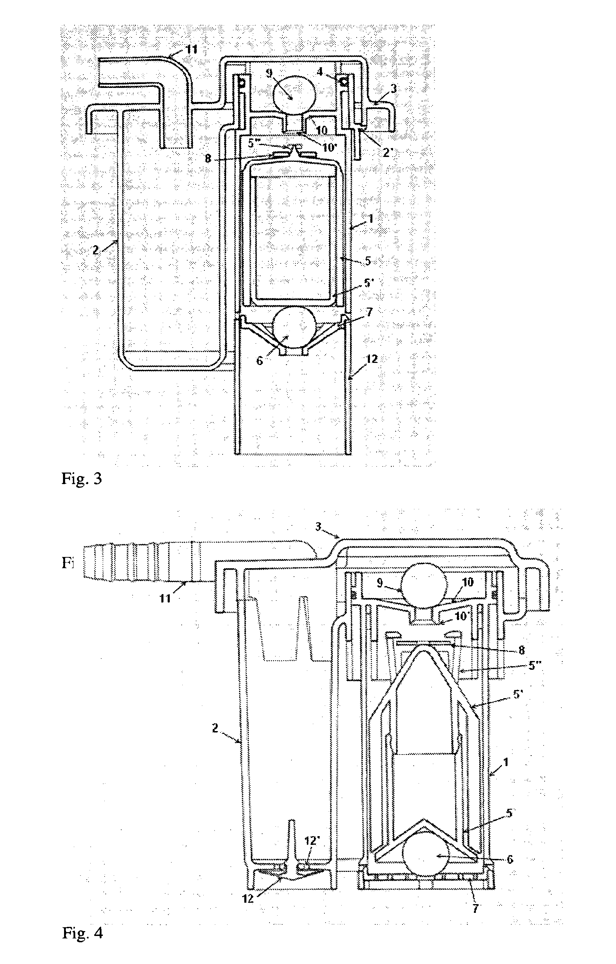

Figure 4 illustrates a system of slightly different geometry, in cross section.

In these figures, identical numbers denote identical elements.

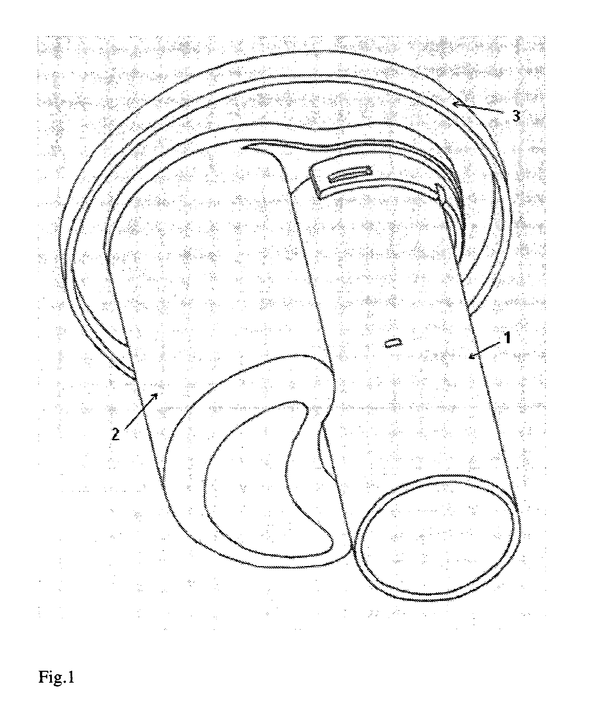

Figure 1 shows a system composed of a float valve provided with a chamber (1) and with a closed volume (2) provided with a lateral wall, the chamber of the float valve (1) and the lateral wall of the volume (2) both being fitted by clip-fastening into a common cover (3). This figure clearly shows how, according to the invention, the closed volume (2) partly surrounds the chamber (1) of the valve and thus results in a compact assembly.

Figures 2 and 3 illustrate the other elements of the system, which cannot be seen in the overall view, namely:
- a seal (4) serving to seal off the connection between the chamber (1) of the valve and the volume (2), this connection involving an annular appendage (2') moulded as one part with the volume (2) and into which the chamber (1) of the valve is clipped;
- two parts (5, 5') intended to form a sealed valve;
- a heavy ball (6) intended to provide the ROV function and being able to move on an apertured dish (9);
- a seal (8) pierced by a hole and intended to be placed over a needle (5") at the head of the float;
- a second heavy ball (7) intended to provide the OFP function and able to move on a plate (10) moulded as one part with the chamber (1) and provided with a venting opening (10') intended to be closed off by the valve (5, 5') and the seal (8); and
- a fitting (11) for connection to a venting duct (not shown), said fitting (11) being moulded as one part with the cover (3).

Figure 2 shows all these elements in an exploded view, while Figure 3 shows a cross section through all these elements when assembled. It may be seen in Figure 3 that the chamber (1) is extended by a skirt (12) below the region where the float (5, 5') slides.

In Figures 1 to 3, the device (12, 12') for draining the volume (2) has not been shown. However, it is shown in Figure 4, which represents in fact a system with a slightly different float valve, namely essentially:
- one in which the needle (5") is replaced with fingers (5"');
- in which it is the bottom of the float valve (4) that is frustoconical and in which the dish (7) is flattened into a plate;
- and in which the chamber (1) does not include a skirt.

The float valves shown in Figures 1 to 3 and Figure 4 are two-staged float valves, which form the subject of a copending application in the name of the Applicant, in which their mode of operation is explained in detail.

Overall, the systems illustrated in these figures operate as follows:
- while the float (5) is in its rest position (that illustrated), the gases present in the tank are vented via the float valve, passing respectively through the dish (7), along the float (5), through the aperture (10') (the ball being able to move on its seat during the operation and thus freeing the aperture); and then, via the closed volume (2), through the fitting (11) to the venting duct. Any liquids entrained by these gases drop to the bottom of the container, which empties by means of the inverted umbrella diaphragm (12) and the associated holes (12') when a certain weight of liquid is present.
- when the liquid rises in the container (for example in the event of a roll-over or a wave) and gets past the support (7) for the float (5), the latter rises in the chamber (1) and closes off the aperture (10'), preventing liquid and gases from penetrating therein; and
- when the liquid redescends, the float (5) also redescends, freeing the aperture in the seal (8), which also ends up redscending, and the venting resumes as explained above.

## Claims

1. Venting system for a liquid tank, comprising, a valve having a chamber (1) located at least partly in the tank and a float (5, 5') capable of sliding in the chamber (1) and, a closed volume (2) at least partly internal to the tank and provided with a draining device (12), which acts as a container (2) intended to collect and retain any liquid entrainment coming from the tank, the chamber (1) of the float valve being located outside the volume of the container (2), the chamber (1) having a substantially cylindrical shape and a circular cross section, **characterized in that** the volume of the container (2) embraces the chamber (1) of said valve, and, the closed volume (2) has an elongate shape and a cross section substantially of U or moon-crescent shape which embraces the substantially circular cross section of the chamber (1).

2. Venting system according to the preceding claim, **characterized in that** the float (5, 5') is a leaktight float, not having apertures liable to trap liquid.

3. Venting system according to either of the preceding claims **characterized in that** the float valve includes a cover (3) integral with the chamber (1) and susceptible to be sealingly fastened to a wall of the tank.

4. Venting system according to the preceding claim, **characterized in that** the cover (3) is susceptible to be fastened to a relief portion of the tank, either directly or via the use of an intermediate part.

5. Venting system according to any one of the preceding claims, **characterized in that** the float valve is longer than the closed volume (2) and includes a skirt (12) that extends its chamber (1).

6. Venting system according to Claim 3 or 4, **characterized in that** the closed volume (2) comprises a lateral wall and a cover which is made as one part with the cover (3) for the float valve and incorporates a fitting (11) for connection to a venting duct.

7. Venting system according to the preceding claim, **characterized in that** the lateral wall of the closed volume (2) includes an appendage of substantially annular shape into which the chamber (1) of the float valve is clipped, the assembly being clipped into the cover (3) which is itself fastened to the wall of the tank.

8. Venting system according to any one of the preceding claims, **characterized in that** the float valve and the closed volume (2) communicate via a passage that includes or is preceded or followed by baffles.

9. Venting system according to any one of the preceding claims, **characterized in that** the tank is a fuel tank based on HDPE and **in that** the system includes a cover (3) that is based on HDPE and a chamber (1), a float (5, 5') and a closed volume (2) that are based on POM, i.e. polyoxymethylene, or on PBT, i.e. polybutylene terephthalate.

## Patentansprüche

1. Lüftungssystem für einen Flüssigkeitstank mit einem Ventil mit einer mindestens teilweise im Tank angeordneten Kammer (1) und einem Schwimmer (5, 5'), der in der Kammer (1) gleiten kann, und einem abgeschlossenen Volumen (2), das mindestens teilweise im Inneren des Tanks liegt und mit einer Ablaufvorrichtung (12) versehen ist, die als ein Behälter (2) wirkt, der zum Sammeln und Halten einer etwaigen Flüssigkeitsmitführung, die vom Tank kommt, vorgesehen ist, wobei die Kammer (1) des Schwimmerventils außerhalb des Volumens des Behälters (2) angeordnet ist, im Wesentlichen zylinderförmig ist und einen kreisförmigen Querschnitt hat, **dadurch gekennzeichnet, dass** das Volumen des Behälters (2) die Kammer (1) des Ventils umfängt und das abgeschlossene Volumen (2) eine längliche Form und einen im Wesentlichen U- oder halbmondförmigen Querschnitt hat, der den im Wesentlichen kreisförmigen Querschnitt der Kammer (1) umfängt.

2. Lüftungssystem nach dem vorhergehenden Anspruch, **dadurch gekennzeichnet, dass** der Schwimmer (5, 5') ein dichter Schwimmer ohne Öffnungen ist, in denen Flüssigkeit eingeschlossen werden könnte.

3. Lüftungssystem nach einem der vorhergehenden Ansprüche, **dadurch gekennzeichnet, dass** das Schwimmerventil eine Abdeckung (3) aufweist, die mit der Kammer (1) einstückig ist und dichtend an einer Wand des Tanks befestigt werden kann.

4. Lüftungssystem nach dem vorhergehenden Anspruch, **dadurch gekennzeichnet, dass** die Abdeckung (3) entweder direkt oder über den Einsatz eines Zwischenstücks an einem Entlastungsabschnitt des Tanks befestigt werden kann.

5. Lüftungssystem nach einem der vorhergehenden Ansprüche, **dadurch gekennzeichnet, dass** das Schwimmerventil länger als das abgeschlossene Volumen (2) ist und einen Schurz (12) aufweist, der seine Kammer (1) verlängert.

6. Lüftungssystem nach Anspruch 3 oder 4, **dadurch gekennzeichnet, dass** das abgeschlossene Volumen (2) eine Seitenwand und eine Abdeckung umfasst, die einteilig mit der Abdeckung (3) für das Schwimmerventil hergestellt ist und ein Anschlussstück (11) zum Anschluss an einen Lüftungskanal einschließt.

7. Lüftungssystem nach dem vorhergehenden Anspruch, **dadurch gekennzeichnet, dass** die Seitenwand des abgeschlossenen Volumens (2) einen im Wesentlichen ringförmigen Anhang aufweist, in den die Kammer (1) des Schwimmerventils eingeklammert ist, wobei die Anordnung in die Abdeckung (3) eingeklammert ist, die ihrerseits an der Wand des Tanks befestigt ist.

8. Lüftungssystem nach einem der vorhergehenden Ansprüche, **dadurch gekennzeichnet, dass** das Schwimmerventil und das abgeschlossene Volumen (2) über einen Durchgang miteinander in Verbindung stehen, der Prallflächen aufweist, dem Prallflächen vorangehen oder auf den Prallflächen folgen.

9. Lüftungssystem nach einem der vorhergehenden Ansprüche, **dadurch gekennzeichnet, dass** der Tank ein Kraftstofftank auf HDPE-Basis ist und dass das System eine Abdeckung (3) auf HDPE-Basis sowie eine Kammer (1), einen Schwimmer (5, 5') und ein abgeschlossenes Volumen (2) auf POM-, d. h. Polyoxymethylenbasis, oder auf PBT-, d. h. Polybutylenterephthalatbasis aufweist.

## Revendications

1. Système de mise à l'air d'un réservoir à liquide comprenant un clapet comportant un fût (1) situé au moins en partie dans le réservoir et un flotteur (5, 5') apte à coulisser dans le fût (1), et un volume fermé (2) au moins en partie interne au réservoir et muni d'un dispositif de vidange (12), qui fait office de capacité (2) destinée à recueillir et retenir des entraînements éventuels de liquide provenant du réservoir, le fût (1) du clapet à flotteur étant situé hors du volume de la capacité (2) et présentant une forme substantiellement cylindrique et une section circulaire, **caractérisé en ce que** le volume de la capacité (2) entoure au moins en partie le fût (1) du clapet et présente une forme allongée et une section substantiellement en forme de U ou de croissant de lune qui entoure au moins en partie la section substantiellement circulaire du fût.

2. Système de mise à l'air selon la revendication précédente, **caractérisé en ce que** le flotteur (5, 5') est un flotteur étanche, ne comprenant pas d'orifices susceptibles de piéger du liquide.

3. Système de mise à l'air selon une quelconque des revendications précédentes, **caractérisé en ce que** le réservoir est une enceinte fermée délimitée par une paroi et **en ce que** le clapet à flotteur comprend un couvercle (3) qui est solidaire du fût (1) et est fixé de manière étanche sur la paroi du réservoir.

4. Système de mise à l'air selon la revendication précédente, **caractérisé en ce que** le conduit de mise à l'air est interne au réservoir et **en ce que** la paroi du réservoir comprend une portion en relief qui permet de fixer le couvercle (3) au réservoir soit directement, soit via le recours à une pièce intermédiaire.

5. Système de mise à l'air selon une quelconque des revendications précédentes, **caractérisé en ce que** le clapet est plus long que le volume fermé (2) et comprend une jupe (12) qui prolonge son fût (1).

6. Système de mise à l'air selon la revendication 3 ou 4, **caractérisé en ce que** le volume fermé (2) comprend une paroi latérale et un couvercle qui est réalisé d'une pièce avec le couvercle du clapet (3) et qui intègre un raccord (11) vers un conduit de mise à l'air.

7. Système de mise à l'air selon la revendication précédente, **caractérisé en ce que** la paroi latérale du volume fermé (2) comprend un appendice de forme substantiellement annulaire dans lequel le fût (1) du clapet est clipsé, l'ensemble étant clipsé au couvercle (3) qui est lui fixé sur la paroi du réservoir.

8. Système de mise à l'air selon une quelconque des revendications précédentes, **caractérisé en ce que** le clapet et le volume fermé (2) communiquent par un passage comprenant ou étant précédé ou suivi de chicanes.

9. Système de mise à l'air selon une quelconque des revendications précédentes, **caractérisé en ce que** le réservoir est un réservoir à carburant à base de PEHD et **en ce que** le système inclut un couvercle (3) à base de PEHD et un fût (1), un flotteur (5, 5') et un volume fermé (2) à base de POM c.à.d. de polyoxyméthylène, ou de PBT c.à.d. de polybutylène téréphtalate.
